# EUROPEAN PATENT SPECIFICATION

(11) **EP 2 551 093 B1**
(45) Date of publication and mention of the grant of the patent: **01.01.2014**
(21) Application number: 11006217.1
(22) Date of filing: 28.07.2011
(51) Int. Cl.: B29C 73/18, B29C 73/00, B29C 73/16

(54) **Healable composite materials based on reversible binder systems**
Heilbare Verbundstoffe auf der Basis von reversiblen Bindersystemen
Matériaux composites réparables à base de systèmes liant réversibles

(43) Date of publication of application: 30.01.2013
(73) Proprietor: EADS Deutschland GmbH, 85521 Ottobrunn (DE)
(72) Inventor: Luinge, Hans, Dr., 7559 DW Hengelo (NL)

(56) References cited:
- WO-A1-2009/113025
- US-A1- 2008 300 340
- KESSLER M R ET AL: "Self-healing structural composite materials", COMPOSITES PART A: APPLIED SCIENCE AND MANUFACTURING, ELSEVIER SCIENCE PUBLISHERS B.V., AMSTERDAM, NL, vol. 34, no. 8, 1 August 2003 (2003-08-01) , pages 743-753, XP004443354, ISSN: 1359-835X, DOI: 10.1016/S1359-835X(03)00138-6

## Description

The present invention relates to a process for preparing healable composite materials, to healable composite materials obtainable by such process as well as to its use as a cabin component and/or structural component in the field of transport vehicles and a healing process.

Composite materials are made up of at least a composite matrix which is reinforced by fibres or particles and are characterized in that the constituent components retain their identities in the composite material, that is to say, they do not dissolve or merge completely into one another although they act in concert. The composite matrix surrounds and supports the reinforcing components by maintaining their relative positions, whereby the reinforcing components impart their special mechanical and physical properties to enhance the matrix properties. A synergism between the constituent components produces composite materials that are often superior in their mechanical and physical properties over the corresponding individual components or metallic structures and are thus widely used in structural applications of a great variety ranging from e.g. microelectronics and civil infrastructures such as bridges to transport vehicles such as aircrafts, spacecrafts, high-speed trains, cars, boats and ships.

Despite of the improved mechanical and physical properties of the composite materials, they are susceptible to damages on a microscopic level deep within the structure during and after an impact on the material, for example, by sudden temperature changes or mechanical vibrations and mechanical stresses of various types. Once damages such as microcracks have been formed within the composite material, the integrity of the structure is significantly reduced resulting in a decrease of life-time and reliability of the corresponding prepared final product.

In the art, several attempts have been made to minimize the damage caused by an impact on the composite material for maintaining the structural integrity and for increasing the life-time and reliability of a product made of a composite material.

For instance, self-repairing composite materials and corresponding processes for the preparation of these materials have been proposed in which a repairing process is initiated by the microcrack itself. In this regard, the utilization of microcapsules and/or hollow fibres dispersed within the matrix are described in the art, wherein an approaching crack ruptures dispersed microcapsules and/or hollow fibres which subsequently release a healing-agent into the microcrack through capillary actions. A polymerization reaction of the healing-agent is than initiated by its contact with an embedded catalyst. For example, US 6,527,849 relates to a self-repairing, fiber reinforced matrix material including a matrix material having disposed within the matrix hollow fibres having a selectively releasable modifying agent contained therein. US 2011/0118385 and US 2010/0168280 refer to a process for preparing a self-healing composite material including a matrix of epoxy polymer in which a catalyst of ring opening metathesis reaction and vessels containing at least one monomer able to polymerize due to a ring opening metathesis reaction are dispersed. WO 02/064653 relates to a composite material containing a polymer, a polymerizer, a corresponding catalyst for the polymerizer, and a plurality of capsules. US 2007/087198 describes a system for self-repairing matrices such as concrete or cementitous matrices, polymeric matrices, and/or fibrous matrices, including laminates thereof. The system includes repair agents retained in and/or on vessels, such as hollow fibres, within the matrix. US 2004/0007784 refers to a self-healing polymer composition containing a polymer media and a plurality of microcapsules of flowable polymerizable material dispersed in the polymer media, wherein the microcapsules of flowable polymerizable material contain a flowable polymerizable material and have an outer surface upon which at least one polymerization agent is attached. M. Motuku et al., Smart Mater. Struct. 1999, 8, p. 623 have proposed self-healing by using hollow fibres as well as micro-capsules as storage vessels for healing materials.

However, it is well known that damages in the composite material initially starts in the matrix region or at the fibrematrix interface and not in the fibres so that hollow fibres and/or microcapsules will not fracture under light impact loads unless the hollow fibres and/or microcapsules are substantially weaker than conventional reinforcing fibres. In addition thereto, the crack path often proceeds along the capsule/matrix interface without fracturing the capsules. Accordingly, without fiber fracture, healing is impossible using the hollow fiber and/or microcapsule technique. Furthermore, a uniform distribution of the hollow fibres and/or microcapsules containing the healing agent in the composite matrix and the fabrication of the composite material is very complicated and thus often leads to an early rupture during processing. Another disadvantage which may arise during processing of the composite material is that an improper impregnation of the hollow fiber and/or microcapsule with the matrix may lead to voids formed in the composite material and, furthermore, may cause a reduction in strength in the final material. In addition thereto, the proportion of hollow fibres and/or microcapsules must be high in order to provide a good distribution of healing agent in the event of damage which also causes a reduction in the overall structural strength of the composite material. Furthermore, this method using capsules only allows one healing cycle, after which the healing agent has reacted and is passified.

Another approach utilizes the properties of thermoplastic materials which are, unlike thermoset materials which are usually used as composite matrix, softened by application of heat or other catalysts and can thus be heated and reshaped for several times. For instance, US 2011/0023611 describes self-healing composite materials comprising a fiber-reinforced polymeric matrix, wherein the polymeric matrix comprises a thermosetting polymer and a thermoplastic polymer. WO 2006/072767 relates to a composite material provided with a damage detection system, the composite material comprising a fiber-reinforced polymeric matrix, wherein the fiber reinforcement comprises electrically conductive fibres and the polymeric matrix comprises a thermosetting polymer and a thermoplastic polymer. WO 2011/144971 refers to a self healing polymer material comprising a primary polymer phase and a secondary polymer phase, wherein the primary polymer phase comprises a thermoset polymer matrix or one or more polymerizable thermoset agents capable, on curing, of producing a thermoset polymer matrix; the secondary polymer phase comprises a thermoplastic polymer that is capable of acting as a self healing agent and being chemically reactive, on post-curing or healing of the self healing polymer material.

Also self-healing materials wherein the polymeric matrix comprises a thermosetting polymer and a thermoplastic polymer suffer several disadvantages as the thermoplastic matrix provides a low healing efficiency so that a substantial weakening of the structural integrity cannot be prevented in most cases if an impact occurs on the material. Furthermore, the incorporation of a thermoplastic polymer into a thermosetting polmer increases the viscosity of the polymeric matrix and may, thus, hinder the subsequent infusion or infiltration processing. As a consequence, areas of variable polymer matrices may be observed in the composite matrix which may lead to a reduction in the overall structural integrity of the prepared composite material.

Thus, there is still a need in the art for providing a process which avoids the foregoing disadvantages and especially allows for improving the mechanical and physical properties of the composite material during and/or after an impact on the composite material.

Accordingly, it is an objective of the present invention to provide a process for preparing a composite material wherein the structural integrity of the resulting composite material can be restored during and/or after an impact on the composite material. A further objective of the present invention is to provide a process for preparing a composite material wherein the resulting composite material suffers less damage such as microcracks during and/or after an impact on the composite material. Another objective of the present invention is to provide a process for preparing a composite material wherein the resulting composite material maintains its structural integrity during and/or after an impact on the composite material. A further objective of the present invention is to provide a process for preparing a composite material wherein the composite material has an increased life-time. Another objective of the present invention is to provide a process for preparing a composite material wherein the resulting composite has an increased reliability. Further objectives can be gathered from the following description of the invention.

The foregoing and other objectives are solved by the subjectmatter as defined herein in claim 1. Advantageous embodiments of the inventive process are defined in the corresponding sub-claims.

According to a first aspect of the present invention, a process for preparing healable composite materials is provided, said process comprise the steps of:
a) providing reinforcing fibres;
b) providing a reversible binder system comprising at least one 1,3-diene and/or at least one dienophile which is reactive with the at least one 1,3-diene;
c) providing a thermosetting resin composition;
d) contacting the reinforcing fibres of step a) with the reversible binder system of step b) for obtaining a preform of the healable composite material; and
e) contacting the preform obtained in step d) with the thermosetting resin composition provided in step c) for obtaining a healable composite material.

The inventors surprisingly found that the foregoing process according to the present invention leads to composite materials wherein the structural integrity of the resulting composite material can be restored during and/or after an impact on the composite material. Furthermore, the inventors found that the resulting composite material maintains its structural integrity during and/or after an impact on the composite material. More precisely, the inventors found that the structural integrity of a composite material can be effectively restored and/or maintained by preparing the composite material from a composition containing a reversible binder system.

Another aspect of the present invention is directed to a healable composite material obtainable by the process. A further aspect of the present invention is directed to the use of a healable composite material as a cabin component and/or as a structural component in transport vehicles, for example in aircrafts or spacecrafts. Another aspect of the present invention is directed to a healing process, comprising the steps of providing the healable composite material during and/or after an impact on the healable composite material; and heating the healable composite material.

Preferably, the reinforcing fibres are selected from the group consisting of carbon fibres, glass fibres, ceramic fibres, metal fibres, silicon carbide fibres aramid fibres, biobased fibres, basalt fibres and mixtures thereof, preferably the reinforcing fibres are carbon fibres.

Preferably, the reversible binder system comprises at least one epoxy resin functionalized with a 1,3-diene and/or at least one epoxy resin functionalized with a dienophile. It is preferred that the reversible binder system comprises at least one epoxy resin functionalized with a dienophile.

Preferably, the reversible binder system comprises at least one 1,3-diene selected from the group consisting of furane, furfuryl amine, furfuryl glydcidyl ether, 2-ethoxy methyl furane, furfuryl acetate, furfuryl diacetate, furfuryl alcohol, furfuryl aldehyde, furfuryl chloride, furfuryl bromide, furfuryl iodide, furfuryl isocyanate, furfuryl isothiocyanate, 2,2'-difurfuryl ether, furfuryl benzoate, furfuryl thiobutyrate, furfuryl acrylate, furfuryl pyrrole, furfuryl propionate, furfuryl butanoate, furfuryl pentanoate, furfuryl octanoate, furfuryl 2-furoate, furfuryl phenylacetate, ethyl furfuryl ether, isopropyl furfuryl ether, furfuryl propyl disulfide and mixtures thereof. It is preferred that the reversible binder system comprises at least one 1,3-diene selected from furfuryl amine and/or furfuryl glycidyl ether.

Preferably, the reversible binder system comprises at least one 1,3-dienophile selected from the group consisting of 4,4'-diphenylmethane bismaleimide, bis-(3-ethyl-5-methyl-4-maleimidephenyl)methane, 2,2'-bis-[4-(4-maleimidephenoxy)phenyl]propane, arylamide bisnadimide, N-phenyl nadimide, N-(10-carboxydecyl)nadimide, N-(p-carboxyphenyl)nadimide and mixtures thereof. It is preferred that the reversible binder system comprises 4,4'-diphenylmethane bismaleimide as the at least one 1,3-dienophile.

Preferably, the thermosetting resin composition is selected from an epoxy resin, a phenol formaldehyde resin, melamine formaldehyde resin, urea formaldehyde resin, bismaleimide resin, polyimide resin, cyanate ester resin, benzoxazine resin, vinyl ester resin, polyester resin, furanic resins and mixtures thereof. It is preferred that the thermosetting resin composition is an epoxy resin.

Preferably, the contacting of step d) is carried out by spraying, immersing, brushing and/or applying the reversible binder system to a roller and transferring the system onto the reinforcing fibres by using the roller.

Preferably, the contacting of step e) is carried out by infusion. It is preferred that the contacting of step e) is carried out by infusion under elevated temperature.

Preferably, the contacting of step e) is carried out below 140°C, preferably below 130 °C and most preferably below 125 °C.

As set out above, the inventive process for preparing healable composite materials comprises the steps a), b), c), d) and e). In the following, it is referred to further details of the present invention and especially the foregoing steps of the inventive process for preparing the healable composite materials.

### Step a): Providing reinforcing fibres

According to step a) of the process of the present invention, reinforcing fibres are provided.

Any natural or synthetic fibre material commonly incorporated in composite materials may be used in the processes of the present invention.

Preferably, the reinforcing fibres are selected from the group consisting of carbon fibres, glass fibres, ceramic fibres, metal fibres, silicon carbide fibres, aramid fibres (e.g. Kevlar™), biobased fibres, basalt fibres and mixtures thereof.

If the reinforcing fibres are biobased fibres the fibres are preferably selected from cotton, flax, hemp, jute, ramie, coir, sisal, abaca and mixtures thereof. For example, the biobased fibres are flax and/or hemp. It is preferred that the biobased fibres are flax or hemp.

Preferably, the reinforcing fibres are carbon fibres and/or glass fibres. For example, the reinforcing fibres are carbon fibres.

The reinforcing fibres are preferably provided in the form of a fibre bundle, a fibre roving or tow, a fibre mat, a fibre tape, a fibre weave, multilayer fibre fabrics, stacks of fibre fabrics or groups of fibre bundles.

In case the reinforcing fibres are provided in the form of a bundle, the fibres of the bundle are preferably all of the same kind. Preferably, the fibres of the bundle may be assembled and stitched together by using well-known stitching yarns such as polyamide or polyester.

Preferably, the reinforcing fibres are provided in the form of a continuous roving or mat with enough integrity to be employed in the present process. The number of fibres in the roving or tow can be varied and a wide range of fibres are included in rovings known in the art. Rovings may be formed using different thicknesses of filaments, for example, having a fibre thickness from 0,5 µm to 25 µm.

If the reinforcing fibres are carbon fibres, standard or intermediate modulus fibres of between 2500-3000 filaments per fibre tow are preferred. Preferably, the fibres are provided in the form of a weave structure of between 100-2500 g/m² fibre areal weight. Typical weave structures include plain, satin and twill weaves. For example, the reinforcing fibres are provided in the form of a plurality of layers of fibre weaves and/or fibre bundles. The skilled man will adapt the arrangement of the layers (such as the specific angle to each other) according to his needs and available materials. It is preferred that the layers are arranged such that the axes of reinforcing fibres in different layers lie at a specific angle to each other. Preferably, the angle is from 0 ° to 90 ° and/or -45 ° to 45 ° relative to the axes. For example, the layers of reinforcing fibres are arranged in a quasiisotropic lay-up.

Preferably, the reinforcing fibres are provided in an amount of at least 30 wt.-%, more preferably from 35 to 80 wt.-%, even more preferably from 40 to 70 wt.-% and most preferably from 45 to 65 wt.-%, based on the total weight of the composite material.

For example, if the reinforcing fibres are carbon fibres, the amount of the fibres is of at least 40 wt.-%, preferably from 50 to 80 wt.-%, more preferably from 55 to 70 wt.-% and most preferably from 60 to 65 wt.-%, based on the total weight of the composite material.

If the reinforcing fibres are glass fibres, the amount of the fibres is preferably of at least 30 wt.-%, preferably from 35 to 65 wt.-%, more preferably from 40 to 60 wt.-% and most preferably from 45 to 55 wt.-%, based on the total weight of the composite material.

### Step b): Providing a reversible binder system

According to step b) of the process of the present invention, a reversible binder system is provided comprising at least one 1,3-diene and at least one dienophile which is reactive with the at least one 1,3-diene.

The term "reversible binder system" in the meaning of the present invention refers to a system that is capable to hold the reinforcing fibres together after shaping and consolidating in order to maintain shape and to control fibre orientation. Typical binder systems comprise polymeric materials. Furthermore, it refers to a binder system that is capable to impart the possibility of restoring the structural integrity of the resulting composite material and/or after an impact on the composite material.

In general, the present invention is applicable to all pairs of 1,3-dienes and dienophiles that exhibit orthogonal reactivity towards each other, i.e the at least one 1,3-diene is reactive towards the at least one dienophile and vice versa.

Preferably, the at least one 1,3-diene and the at least one dienophile are selected such that they are capable of an orthogonal [4+2] cyclo-addition, which is also called "Diels-Alder reaction", in which a compound is formed comprising a cyclohexene ring formed by the reaction between the 1,3-diene and the dienophile. More preferably, the at least one 1,3-diene and the at least one dienophile are selected such that they are capable to react via a "retro Diels-Alder reaction", that is to say the at least one 1,3-diene and the at least one dienophile are reformed in this reaction. It can be accomplished spontaneously with heat.

It will be appreciated that the term "reversible" relates to the formation of a product resulting from the orthogonal [4+2] cyclo-addition of a 1,3-diene and a dienophile and the reformation of the 1,3-diene and the dienophile in the corresponding retro Diels-Alder reaction.

Preferably, the selected reversible binder system is selected such that it has a mechanical performance and physical properties that do not result in the degradation of the overall structural integrity of the thermosetting polymer and the resulting composite material. These properties include adequate mechanical performance of the polymer at a range of service temperatures, low levels of water retention, and high solvent resistance.

Although any 1,3-diene may be utilized in the reversible binder system of the process of the present invention that is capable of an orthogonal [4+2] cyclo-addition and the corresponding retro Diels-Alder reaction, it is even more preferred that the reversible binder system comprises at least one 1,3-diene which is a furane derivate.

For example, the reversible binder system comprises at least one 1,3-diene selected from the group consisting of furane, furfuryl amine, furfuryl glydcidyl ether, 2-ethoxy methyl furane, furfuryl acetate, furfuryl diacetate, furfuryl alcohol, furfuryl aldehyde, furfuryl chloride, furfuryl bromide, furfuryl iodide, furfuryl isocyanate, furfuryl isothiocyanate, 2,2'-difurfuryl ether, furfuryl benzoate, furfuryl thiobutyrate, furfuryl acrylate, furfuryl pyrrole, furfuryl propionate, furfuryl butanoate, furfuryl pentanoate, furfuryl octanoate, furfuryl 2-furoate, furfuryl phenylacetate, ethyl furfuryl ether, isopropyl furfuryl ether, furfuryl propyl disulfide and mixtures thereof.

Preferably, the reversible binder system comprises at least one 1,3-diene selected from furfuryl amine and/or furfuryl glycidyl ether.

Additionally or alternatively, any dienophile may be utilized in the reversible binder system of the process of the present invention that is capable of an orthogonal [4+2] cyclo-addition with the selected at least one 1,3-diene. More preferably, the at least one dienophile is selected such that it is capable to react via a "retro Diels-Alder reaction" in that the at least one 1,3-diene and the at least one dienophile of the corresponding orthogonal [4+2] cyclo-addition are reformed.

For example, the reversible binder system comprises at least one 1,3-dienophile selected from the group consisting of 4,4'-diphenylmethane bismaleimide, bis-(3-ethyl-5-methyl-4-maleimidephenyl)methane, 2,2'-bis-[4-(4-maleimidephenoxy)phenyl]propane, arylamide bisnadimide, N-phenyl nadimide, N-(10-carboxydecyl)nadimide, N-(p-carboxyphenyl)nadimide and mixtures thereof.

Preferably, the reversible binder system comprises 4,4'-diphenylmethane bismaleimide as the at least one 1,3-dienophile.

It is preferred that the reversible binder system comprises at least 90 wt.-% of the at least one 1,3-diene and at least one dienophile which is reactive with the at least one 1,3-diene, more preferably the reversible binder system comprises between 90 wt.-% and 98 wt.-% of the at least one 1,3-diene and at least one dienophile which is reactive with the at least one 1,3-diene and most preferably between 95 wt.-% and 98 wt.-%, based on the total weight of the reversible binder system.

Preferably, the reversible binder system is the at least one 1,3-diene and at least one dienophile which is reactive with the at least one 1,3-diene.

Additionally or alternatively, the at least one 1,3-diene and at least one dienophile which is reactive with the at least one 1,3-diene comprised in the reversible binder system of the present invention may be provided as an admixture to binder systems well known in the field of composite manufacturing. For example, a binder system suitable for use in the process of the present invention comprises a polymeric resin.

For example, the polymeric resin suitable as the binder system is an epoxy resin.

If the at least one 1,3-diene and at least one dienophile which is reactive with the at least one 1,3-diene is provided as an admixture in the polymeric resin, the reversible binder system comprises the at least one 1,3-diene and at least one dienophile preferably in an amount of at least 20 wt.-%, more preferably between 20 and 75 wt.-% and most preferably between 25 and 50 wt.-%, based on the total weight of the reversible binder system.

Additionally or alternatively, the at least one 1,3-diene and at least one dienophile which is reactive with the at least one 1,3-diene comprised in the reversible binder system of the present invention may be provided as a polymeric resin functionalized with the at least one 1,3-diene and at least one dienophile which is reactive with the at least one 1,3-diene. That is to say, the curable monomers or oligomers provided in the polymeric resin are functionalized with the at least one 1,3-diene and the at least one dienophile. For example, a polymeric resin may be provided in which at least a part of the curable monomers or oligomers are functionalized with the at least one 1,3-diene. Additionally or alternatively, a polymeric resin may be provided in which at least a part of the curable monomers or oligomers are functionalized with the at least one dienophile. Preferably, a polymeric polymeric resin may be provided in which at least a part of the curable monomers or oligomers are functionalized with the at least one 1,3-diene and in which at least a part of the curable monomers or oligomers are functionalized with the at least one dienophile which is reactive with the at least one 1,3-diene.

The term "functionalized" in the meaning of the present invention refers to the at least one 1,3-diene and/or at least one dienophile which is/are linked to monomers or oligomers of the polymeric resin by a covalent bond. Preferably, the covalent bond is achieved by the reaction of an epoxide substituent attached to monomers of the polymeric resin with an amine substituent attached to the at least one 1,3-diene and/or at least one dienophile. Additionally or alternatively, the covalent bond is achieved by the reaction of an amine substituent attached to monomers of the polymeric resin with an epoxide substituent attached to the at least one 1,3-diene and/or at least one dienophile.

Preferably, the reversible binder system comprises at least one epoxy resin functionalized with a 1,3-diene. Additionally or alternatively, the reversible binder system comprises at least one epoxy resin functionalized with a dienophile which is reactive with the at least one 1,3-diene. For example, the reversible binder system comprises at least one epoxy resin functionalized with a 1,3-diene and at least one epoxy resin functionalized with a dienophile which is reactive with the at least one 1,3-diene. If the reversible binder system comprises at least one epoxy resin functionalized with a 1,3-diene and at least one epoxy resin functionalized with a dienophile which is reactive with the at least one 1,3-diene, the epoxy resins are preferably the same.

The epoxy resin is preferably an epoxy resin such as bisphenol type epoxy resin (for example, bisphenol A epoxy resin), novolak type epoxy resin (for example, novolak epoxy resin, cresol novolak epoxy resin), or biphenyl type epoxy resin. Preferably, the epoxy resin is a novolak type epoxy resin.

Preferably, the reversible binder system comprises both the at least one 1,3-diene and the at least one dienophile which is reactive with the at least one 1,3-diene.

Preferably, the reversible binder system comprises either the at least one 1,3-diene or the at least one dienophile which is reactive with the at least one 1,3-diene. If the reversible binder system comprises either the at least one 1,3-diene or the at least one dienophile, the thermosetting resin composition provided in step c) comprises the orthogonal reactive at least one 1,3-diene or the at least one dienophile. For example, if the reversible binder system comprises the at least one 1,3-diene, the thermosetting resin composition comprises the orthogonal reactive at least one dienophile. Additionally or alternatively, if the reversible binder system comprises the at least one dienophile, the thermosetting resin composition comprises the orthogonal reactive at least one 1,3-diene.

The reversible composite material obtainable by the process of the present invention comprises the at least one 1,3-diene and the at least one dienophile which is reactive with the at least one 1,3-diene such that the mole ratio of the at least one 1,3-diene and the at least one dienophile is from 5:1 to 1:5, more preferably from 4:1 to 1:4, even more preferably from 3:1 to 1:3 and most preferably from 2:1 to 1:2. For example, the mole ratio of the at least one 1,3-diene and the at least one dienophile is about 1:1.

Preferably, the reversible binder system is provided in an amount of at least 2 wt.-%, preferably from 5 to 30 wt.-%, more preferably from 5 to 25 wt.-% and most preferably from 10 to 20 wt.-%, based on the total weight of the thermosetting resin composition.

The reversible binder system can be in a liquid form or be formed into a liquid form.

### Step c): Providing a thermosetting resin composition

According to step c) of the process of the present invention, a thermosetting resin composition is provided.

The term "resin" in the meaning of the present invention refers to a polymeric material, either solid or liquid, prior to processing it into a composite material, i.e. the resin refers to the uncured components of the thermosetting polymer. The uncured thermosetting polymer is normally a mixture including one or more monomers or oligomers of the polymer, one or more hardener components and optionally further additives.

Preferably, the thermosetting resin composition is any suitable thermosetting into which reinforcing fibres can be incorporated. More preferably, the thermosetting resin composition is selected from one of the thermosetting resins typically utilized for preparing composite materials.

For example, the thermosetting resin composition is selected from the group consisting of an epoxy resin, a phenol formaldehyde resin, melamine formaldehyde resin, urea formaldehyde resin, bismaleimide resin, polyimide resin, cyanate ester resin, benzoxazine resin, vinyl ester resin, polyester resin, furanic resins and mixtures thereof.

Preferably, two or more thermosetting resins may be used in combination.

Preferably, the thermosetting resin composition is an epoxy resin.

If the thermosetting resin composition comprises two or more thermosetting resins, the resin preferably comprises a mixture of two thermosetting resins, wherein one thermosetting resin is an epoxy resin.

The epoxy resin may be aliphatic or cycloaliphatic epoxy based resins or arylalkylene epoxy based resin, such as diglycidyl ether based resin or tetraglycidyl based resin. They may be formed by the reaction of a diol and a halohydrin. For example, diglycidyl and tetraglycidyl ether condensation polymers result from the reaction of epichlorohydrin with a bisphenol in the presence of an alkaline catalyst. Bisphenol A is most commonly used but the bisphenols B, F, G, AF, S and H are also suitable. By controlling the operating conditions and varying the ratio of the reactants, products of various equivalent weights can be made.

Preferably, the epoxy resin is a homopolymer with 1 to 9 monomers.

Among the epoxy resins, the arylalkylene epoxy based resin is preferably used. The arylalkylene epoxy based resin is an epoxy resin having one or more arylalkylene groups in one repeating unit. Examples of such arylalkylene epoxy based resin include xylylene epoxy based resin, biphenyldimethylene epoxy based resin, diglycidyl ether based resin, and the like. Among these arylalkylene epoxy based resins, a tetraglycidyl ether based resin and/or a diglycidyl ether based resin is preferably used.

Preferably, the epoxy resin is tetraglycidyl methylene dianiline.

Although any epoxy resin may be utilized, it is even more preferred that the epoxy resin is selected such that the polymer has a weight average molecular weight from 100 to 2,000 g/mole. Preferably, the epoxy resin is selected such that the polymer has a weight average molecular weight of from 100 to 1,500 g/mole and more preferably from 100 to 1,000 g/mole. For example, the epoxy resin is selected such that the polymer has a weight average molecular weight of from 100 to 500 g/mole.

If the thermosetting resin is a bismaleimide resin, the bismaleimide resin is selected such that the polymer has a weight average molecular weight from 100 to 2,000 g/mole. Preferably, the bismaleimide resin is selected such that the polymer has a weight average molecular weight of from 100 to 1,500 g/mole and more preferably from 100 to 1,000 g/mole. For example, the bismaleimide resin is selected such that the polymer has a weight average molecular weight of from 100 to 500 g/mole, specifically of 358.3 g/mole.

If the thermosetting resin is a furanic resin, the furanic resin is selected such that the polymer has a weight average molecular weight from 90 to 110 g/mol. Preferably, the furanic resin is selected such that the polymer has a weight average molecular weight from 95 to 105 g/mol, specifically of 98.10 g/mole.

The thermosetting resin composition comprises the thermosetting resin preferably in an amount of at least 10 wt.-%, more preferably between 10 and 50 wt.-%, even more preferably between 10 and 40 wt.-% and most preferably between 15 and 35 wt.-%, based on the total weight of the composite material.

If the reversible binder system comprises either the at least one 1,3-diene or the at least one dienophile which is reactive with the at least one 1,3-diene, the thermosetting resin composition comprises the orthogonal reactive at least one 1,3-diene or the at least one dienophile. For example, if the reversible binder system comprises the at least one 1,3-diene, the thermosetting resin composition comprises the orthogonal reactive at least one dienophile. Additionally or alternatively, if the reversible binder system comprises the at least one dienophile, the thermosetting resin composition comprises the orthogonal reactive at least one 1,3-diene. Preferably, the curable monomers or oligomers provided in the thermosetting resin composition are functionalized with the at least one 1,3-diene and/or the at least one dienophile. For example, a thermosetting resin may be provided in which at least a part of the curable monomers or oligomers are functionalized with the at least one 1,3-diene. Additionally or alternatively, a thermosetting resin may be provided in which at least a part of the curable monomers or oligomers are functionalized with the at least one dienophile.

Preferably, the thermosetting resin composition comprises at least one epoxy resin functionalized with a 1,3-diene. Additionally or alternatively, the thermosetting resin composition comprises at least one epoxy resin functionalized with a dienophile which is reactive with the at least one 1,3-diene.

If the reversible binder system comprises both the at least one 1,3-diene and the at least one dienophile which is reactive with the at least one 1,3-diene, the thermosetting resin composition may further comprise curable monomers or oligomers that are functionalized with at least one 1,3-diene and at least one dienophile which is reactive with the at least one 1,3-diene.

The thermosetting resin composition of the present invention may comprise further additives generally used for preparing composite materials. Such additives may be added for the purpose of e.g. increasing impact resistance, stability and resistance to oxidation of the polymer product. Preferably, the thermosetting resin composition further comprises at least one component selected from the group comprising curing agents, catalysts, flame retardants, plasticizers, stabilizers, impact modifiers, lubricant additives, processing aids, nonfibrous reinforcements and mixtures thereof.

Preferably, the thermosetting resin composition of the present invention further comprises at least one curing agent. Curing agents are employed in the thermosetting resin composition to promote or control the curing reaction. Such curing agents are well known in the art.

Examples of curing agents preferably comprise aliphatic amines, aromatic amines, anhydrides and mixtures thereof. Preferably, the curing agent is selected from the group consisting of 4,4'-Diaminodiphenylmethane, 4,4'-methylenebis(2,6-diethyleneaniline), 4,4'-methylenebis(2-isopropyl-6-methylaniline) and mixtures thereof.

Preferably, the at least one curing agent is selected from 4,4'-methylenebis(2,6-diethyleneaniline) or 4,4'-methylenebis(2-isopropyl-6-methylaniline). Preferably, the at least one curing agent comprises a mixture of 4,4'-methylenebis(2,6-diethyleneaniline) and 4,4'-methylenebis(2-isopropyl-6-methylaniline).

In case an epoxy resin is used as the thermosetting resin composition, the at least one curing agent preferably comprises a mixture of 4,4'-methylenebis(2,6-diethyleneaniline) and 4,4'-methylenebis(2-isopropyl-6-methylaniline).

If the at least one curing agent comprises a mixture of 4,4'-methylenebis(2,6-diethyleneaniline) and 4,4'-methylenebis(2-isopropyl-6-methylaniline), the mole ratio of 4,4'-methylenebi(2,6-diethyleneaniline) and 4,4'-methylenebi(2-isopropyl-6-methylaniline) is preferably from 99:1 to 1:99, more preferably from 50:1 to 1:50, even more preferably from 30:1 to 1:30 and most preferably from 20:1 to 1:20.

Additionally or alternatively, the thermosetting resin composition of the present invention comprises the at least one curing agent in an amount of at least 5 wt.-%, more preferably between 10 and 80 wt.-%, even more preferably between 10 and 60 wt.-% and most preferably between 10 and 40 wt.-%, based on the total weight of the thermosetting resin composition.

Preferably, the thermosetting resin composition is provided in the form of a monocomponent composition, that is to say the thermosetting resin composition comprises the thermosetting resin as well as the at least one curing agents. Preferably, the thermosetting resin composition is provided in the form of a twocomponent composition, that is to say the thermosetting resin composition comprises the thermosetting resin. The at least one curing agent is provided separately.

Epoxy resins suitable in the process of the present invention are available from a wide variety of commercial sources. Useful epoxy resins include the epoxy resins available from Hex-cel Composites, Duxford, UK as HexFlow^{®}RTM 6 or RTM6-2.

If the thermosetting resin composition is provided in the form of a twocomponent composition, the components of the thermosetting resin composition can be blended by conventional mixing techniques commonly known to the skilled person.

### Step d): Contacting the reinforcing fibres with the reversible binder system

According to step d) of the process of the present invention, the reinforcing fibres of step a) are contacted with the reversible binder system of step b) for obtaining a preform of the healable composite material.

The reinforcing fibres are assembled and pre-shaped to resemble the geometry of the desired part. Preferably, the assembled and pre-shaped part is stabilized by contacting the fibres of the part with the reversible binder system.

Appropriate process conditions which can be applied for contacting the reinforcing fibres with the reversible binder systems are commonly known to the skilled person and/or can be established by routine modifications based on common general knowledge.

For example, the contacting of the reinforcing fibres with the reversible binder system is carried out by spraying, immersing, brushing and/or applying the reversible binder system to a roller and transferring the system onto the reinforcing fibres using the roller.

Preferably, the contacting of the reinforcing fibres with the inventive binder system is carried out by spraying the reversible binder system onto the reinforcing fibres.

The reversible binder system is preferably applied as a liquid. Any solvent conventionally used for binder system solutions may be used. However, preferred solvents are those which are substantially entirely miscible with water. More preferably suitable solvents are aprotic solvents and most preferably suitable solvents are polar aprotic solvents.

Suitable solvents for use in the process of the present invention comprise dimethyl sufoxide, dimethylacetamide, tetramethylurea, gamma-butyrolactone and mixtures thereof. The solvent or solvent mixture may also comprise a co-solvent in order to modify the solution characteristics of the solvent. Suitable co-solvents include any solvent which is completely miscible with any of the aforementioned solvents. Suitable examples include glycol ethers and alcohols.

Alternatively, the contacting of the reinforcing fibres with the inventive binder system is carried out by spraying the reversible binder system onto the reinforcing fibres without using a solvent. That is to say, the binder system is heated up to a temperature such that the binder system has a suitable viscosity for spraying. For example, the binder system is heated above the fluidity point of the binder system provided in the process of the present invention.

Alternatively, the reversible binder system is applied as a powder.

If the reversible binder system is applied as a powder, the reversible binder system is preferably applied in such a way that, when the powder is later melted in a heating step, the reversible binder system flows and contacts a sufficient portion of the reinforcing fibres.

The reinforcing fibres are preferably contacted with the reversible binder system such that at least 1 % of the specific surface area of the reinforcing fibres is covered by the reversible binder system. For example, between 10 % and 99 % of the specific surface area of the reinforcing fibres is covered by the reversible binder system, preferably between 10 % and 80 % and more preferably between 20 and 50 % of the specific surface area.

Additionally or alternatively, the reversible binder system is applied as a veil having a weight area of 5 to 100 g/m², preferably of 10 to 75 g/m², more preferably of 10 to 50 g/m² and most preferably of 20 to 30 g/m².

Preferably, the reversible binder system is provided in an amount of at least 1 wt.-%, more preferably from 1 to 40 wt.-%, even more preferably from 2 to 30 wt.-% and most preferably from 5 to 20 wt.-%, based on the total weight of the reinforcing fibres.

Preferably, the composite of reinforcing fibres and reversible binder system is subjected to a heating step. The heating step is preferably carried out just above the temperature at which the reversed Diels-Alder reaction of the utilized reaction product of the at least one 1,3-diene and the at least one dienophile takes places. The precise temperature is dependent upon the nature of the reversible binder system and the reinforcing fibres provided. Preferably, the heating step is carried out above 60°C, preferably above 80 °C and most preferably above 100 °C. For example, the heating step is carried out at 120 °C.

Preferably, the heating is preferably carried out for a period of time of at most 30 min, more preferably of at most 20 min and most preferably of at most 10 min. In particular, the period of time used for heating the composite of reinforcing fibres and reversible binder system depends on the heating technique utilized. The skilled man will adapt the heating conditions (such as the period of time) according to his needs and available equipment. For example, if a heating technique such as induction or stirr welding is utilized the heating can be as short as e.g. several seconds.

The heating of the composite of reinforcing fibres and reversible binder system can be carried out by any conventional heating means known to the skilled person. For example, the heating of the composite of reinforcing fibres and reversible binder system can be carried out by convection heat transfer, infrared heating system, induction systems, heating pads and/or electrical current.

Additionally or alternatively, the preform of reinforcing fibres and reversible binder system is subjected to further process steps such as compacting. Such compacting is preferably carried out under pressure, such as vacuum pressure.

Preferably, the obtained preform of reinforcing fibres and reversible binder system is subjected to a cooling step to stabilize the obtained preform. For example, the cooling step is carried out under pressure, e.g. vacuum pressure.

The preform of reinforcing fibres and the reversible binder system thus obtained may advantageously be implemented in process step e) of the present invention for preparing healable composite materials.

### Step e): Contacting the preform with the thermosetting resin composition

According to step e) of the process of the present invention, the preform obtained in step d) is contacted with the thermosetting resin composition provided in step c) for obtaining a healable composite material.

In the process of the present invention, the preform obtained in step d) can be brought into contact with the thermosetting resin composition by any conventional direct and indirect processes known to the skilled person.

Appropriate process conditions which can be applied for contacting the preform of reinforcing fibres and reversible binder system with the thermosetting resin composition are commonly known to the skilled person and/or can be established by routine modifications based on common general knowledge.

For example, the contacting of the preform with the thermosetting resin composition may be carried out by injecting the thermosetting resin composition onto the preform.

The injection of the thermosetting resin composition preferably takes place at a certain temperature or in a certain temperature range, at which the resin has such a viscosity that the resin flows uniformly through the preform which is thereby uniformly impregnated without any air and gas pockets being formed.

Preferably, the temperature of the thermosetting resin composition is adjusted such that the viscosity of the resin is in the range between 5 mPas and 500 mPas and more preferably between 10 mPas and 300 mPas.

The preform is preferably contacted with the thermosetting resin composition such that at least 70 % of the specific surface area of the preform is covered by the thermosetting resin composition. For example, between 70 % and 100 % of the specific surface area of the preform is covered by the thermosetting resin composition, preferably between 80 % and 100 % and more preferably between 90 and 100 % of the specific surface area.

Preferably, the preform is subjected to a heating step while being infused with the thermosetting resin composition. The heating and infusion step is preferably carried out just below the temperature at which the reversed Diels-Alder reaction of the utilized reaction product of the at least one 1,3-diene and the at least one dienophile takes places. The precise temperature is dependent upon the nature of the thermosetting resin composition, the reversible binder system and the reinforcing fibres provided.

Preferably, the heating and infusion step is carried out below 140 °C, preferably below 130 °C and most preferably below 125 °C. For example, if an epoxy resin is utilized as the thermosetting resin the heating and infusion step is carried out between 100 and 120 °C.

If the heating and infusion step is carried out at a temperature of between 100 and 120 °, the heating is preferably carried out for a period of time of between 5 and 120 min and most preferably for a period of time of between 10 and 60 min.

Additionally or alternatively, the preform is contacted with the thermosetting resin composition in that the thermosetting resin composition is injected with pressure. For example, the thermosetting resin composition is injected with an injection pressure of at least 0.1 N/mm² and more preferably with a gradually increasing pressure starting from 0.1 N/mm² to 0.9 N/mm² at the end of the injection cycle.

Preferably, the infused preform is cured at a temperature of above 120 °C, preferably of above 150 °C and most preferably of above 170 °C, e.g. a temperature of 175 to 185 °C. For example, if an epoxy resin is utilized as the thermosetting resin, the infused preform is cured at a temperature of 175 to 185 °C, e.g. at 180 °C. If the curing step is carried out at a temperature of between 175 and 185 °, the heating is preferably carried out for a period of time of between 60 and 150 min and most preferably for a period of time of between 90 and 120 min.

Preferably, the obtained composite material is subjected to a cooling step to stabilize the obtained composite. For example, the cooling step is carried out under pressure, e.g. vacuum pressure.

The composite material obtained in step e) of the present process suffers less damage such as microcracks during and/or after an impact on the composite material. Furthermore, the composite material obtained in step e) of the present process maintains its structural integrity during and/or after an impact on the composite material. In addition thereto, the composite material obtained in step e) of the present process has an increased life-time. In particular, the composite material obtained in step e) of the present process offers the possibility to restore the structural integrity of the composite material during and/or after an impact on the composite material.

The structural integrity of the composite material during and/or after an impact on the composite material can be preferably restored by heating the composite material. The heating for restoring the structural integrity of the composite material is preferably carried out just above the temperature at which the reversed Diels-Alder reaction of the utilized reaction product of the at least one 1,3-diene and the at least one dienophile takes places. The precise temperature for restoring the structural integrity of the composite material is dependent upon the nature of the reversible binder system utilized in the composite material.

Preferably, the heating for restoring the structural integrity of the composite material is carried out above 90 °C, preferably above 100 °C and most preferably above 110 °C. For example, the heating is carried out at 120 °C.

The heating for restoring the structural integrity of the composite material can be carried out by any conventional heating means known to the skilled person.

For example, the heating for restoring the structural integrity of the composite material can be carried out by convection heat transfer, infrared heating system, induction systems, heating pads and/or electrical current.

Additionally or alternatively, the heating for restoring the structural integrity of the composite material can be carried out by applying external pressure. Such pressure can be applied by any conventional processes known to the skilled person.

For example, the pressure applied during heating for restoring the structural integrity of the composite material is of at least 0.1 N/mm² and more preferably of at least 0.5 N/mm².

In view of the good results of the healable composite material in restoring the structural integrity during and/or after an impact on the composite material, another aspect of the present invention is directed to a healing process, comprising the steps of providing the healable composite material during and/or after an impact on the healable composite material; and heating the healable composite material.

According to a further aspect of the present invention, a healable composite material obtainable by the process is provided. According to another aspect of the present invention the use of a healable composite material as a cabin component and/or as a structural component in transport vehicles is provided. For example, the healable composite material is used as a cabin component and/or as a structural component in aircrafts or spacecrafts.

## Claims

1. A process for preparing healable composite materials, comprising the following steps:
a) providing reinforcing fibres;
b) providing a reversible binder system comprising at least one 1,3-diene and at least one dienophile which is reactive with the at least one 1,3-diene;
c) providing a thermosetting resin composition;
d) contacting the reinforcing fibres of step a) with the reversible binder system of step b) for obtaining a preform of the healable composite material; and
e) contacting the preform obtained in step d) with the thermosetting resin composition provided in step c) for obtaining a healable composite material.

2. The process according to claim 1, wherein the reinforcing fibres are selected from the group consisting of carbon fibres, glass fibres, ceramic fibres, metal fibres, silicon carbide fibres aramid fibres biobased fibres, basalt fibres and mixtures thereof, preferably the reinforcing fibres are carbon fibres.

3. The process according to any one of the preceding claims, wherein the reversible binder system comprises at least one epoxy resin functionalized with a 1,3-diene and/or at least one epoxy resin functionalized with a dienophile, preferably the reversible binder system comprises at least one epoxy resin functionalized with a dienophile.

4. The process according to any one of the preceding claims, wherein the reversible binder system comprises at least one 1,3-diene selected from the group consisting of furane, furfuryl amine, furfuryl glydcidyl ether, 2-ethoxy methyl furane, furfuryl acetate, furfuryl diacetate, furfuryl alcohol, furfuryl aldehyde, furfuryl chloride, furfuryl bromide, furfuryl iodide, furfuryl isocyanate, furfuryl isothiocyanate, 2,2'-difurfuryl ether, furfuryl benzoate, furfuryl thiobutyrate, furfuryl acrylate, furfuryl pyrrole, furfuryl propionate, furfuryl butanoate, furfuryl pentanoate, furfuryl octanoate, furfuryl 2-furoate, furfuryl phenylacetate, ethyl furfuryl ether, isopropyl furfuryl ether, furfuryl propyl disulfide and mixtures thereof.

5. The process according to claim 4, wherein the reversible binder system comprises at least one 1,3-diene selected from furfuryl amine and/or furfuryl glycidyl ether.

6. The process according to any one of the preceding claims, wherein the reversible binder system comprises at least one 1,3-dienophilee selected from the group consisting of 4,4'-diphenylmethane bismaleimide, bis-(3-ethyl-5-methyl-4-maleimidephenyl)methane, 2,2'-bis-[4-(4-maleimidephenoxy)phenyl]propane, arylamide bisnadimide, N-phenyl nadimide, N-(10-carboxydecyl)nadimide, N-(p-carboxyphenyl)nadimide and mixtures thereof.

7. The process according to claim 6, wherein the reversible binder system comprises 4,4'-diphenylmethane bismaleimide as the at least one 1,3-dienophile.

8. The process according to any one of the preceding claims, wherein the thermosetting resin composition is selected from an epoxy resin, a phenol formaldehyde resin, melamine formaldehyde resin, urea formaldehyde resin, bismaleimide resin, polyimide resin, cyanate ester resin, benzoxazine resin, vinyl ester resin, polyester resin, furanic resins and mixtures thereof, preferably the thermosetting resin composition is an epoxy resin.

9. The process according to any one of the preceding claims, wherein step d) is carried out by spraying, immersing, brushing and/or applying the reversible binder system to a roller and transferring the system onto the reinforcing fibres by using the roller.

10. The process according to any one of the preceding claims, wherein step e) is carried out by infusion, preferably step e) is carried out by infusion under elevated temperature.

11. The process according to claim 10, wherein step e) is carried out below 140 °C, preferably below 130 °C and most preferably below 125 °C.

12. A healable composite material obtainable by the process according to any one of claims 1 to 11.

13. Use of a healable composite material according to claim 12 as a cabin component and/or as a structural component in transport vehicles, for example in aircrafts or spacecrafts.

14. A healing process, comprising the steps of:
a) providing the healable composite material according to claim 12 during and/or after an impact on the healable composite material; and
b) heating the healable composite material of step a).

## Patentansprüche

1. Verfahren zur Herstellung selbstheilender Verbundwerkstoffe, das die folgenden Schritte umfasst:
a) Bereitstellen von Verstärkungsfasern,
b) Bereitstellen eines reversiblen Bindemittelsystems, das mindestens ein 1,3-Dien und mindestens ein Dienophil enthält, das mit dem mindestens einen 1,3-Dien reagiert,
c) Bereitstellen einer wärmeaushärtenden Harzzusammensetzung,
d) Inkontaktbringen der Verstärkungsfasern aus Schritt a) mit dem reversiblen Bindemittelsystem aus Schritt b) zur Erzielung einer Vorform des selbstheilenden Verbundwerkstoffs und
e) Inkontaktbringen der in Schritt d) erzielten Vorform mit der in Schritt c) bereitgestellten wärmeaushärtenden Harzzusammensetzung zur Erzielung eines selbstheilenden Verbundwerkstoffs.

2. Verfahren nach Anspruch 1, wobei die Verstärkungsfasern aus der Gruppe bestehend aus Kohlefasern, Glasfasern, Keramikfasern, Metallfasern, Siliziumkarbidfasern, Aramidfasern, biobasierten Fasern, Basaltfasern und Gemischen daraus ausgewählt werden, wobei die Verstärkungsfasern vorzugsweise Kohlefasern sind.

3. Verfahren nach einem der vorhergehenden Ansprüche, wobei das reversible Bindemittelsystem mindestens ein Epoxidharz enthält, das mit einem 1,3-Dien funktionalisiert ist, und/oder mindestens ein Epoxidharz enthält, das mit einem Dienophil funktionalisiert ist, wobei das reversible Bindemittelsystem vorzugsweise mindestens ein Epoxidharz enthält, das mit einem Dienophil funktionalisiert ist.

4. Verfahren nach einem der vorhergehenden Ansprüche, wobei das reversible Bindemittelsystem mindestens ein 1,3-Dien enthält, das aus der Gruppe bestehend aus Furan, Furfurylamin, Furfurylglycidylether, 2-Ethoxymethylfuran, Furfurylacetat, Furfuryldiacetat, Furfurylalkohol, Furfurylaldehyd, Furfurylchlorid, Furfurylbromid, Furfuryljodid, Furfurylisocyanat, Furfurylisothiocyanat, 2,2'-Difurfurylether, Furfurylbenzoat, Furfurylthiobutyrat, Furfurylacrylat, Furfurylpyrrol, Furfurylpropionat, Furfurylbutanoat, Furfurylpentanoat, Furfuryloktanoat, Furfuryl-2-Furoat, Furfurylphenylacetat, Ethylfurfurylether, Isopropylfurfurylether, Furfurylpropyldisulfid und Gemischen daraus ausgewählt wird.

5. Verfahren nach Anspruch 4, wobei das reversible Bindemittelsystem mindestens ein 1,3-Dien enthält, das aus Furfurylamin und/oder Furfurylglycidylether ausgewählt wird.

6. Verfahren nach einem der vorhergehenden Ansprüche, wobei das reversible Bindemittelsystem mindestens ein 1,3-Dienophil enthält, das aus der Gruppe bestehend aus 4,4'-Diphenylmethan-bismaleinimid, Bis-(3-ethyl-5-methyl-4-maleinimidphenyl)-methan, 2,2'-Bis-[4-(4-maleinimidphenoxy)phenyl]propan, Arylamidbisnadimid, N-Phenylnadimid, N-(10-Carboxydecyl)nadimid, N-(p-Carboxyphenyl)nadimid und Gemischen daraus ausgewählt wird.

7. Verfahren nach Anspruch 6, wobei das reversible Bindemittelsystem 4,4'-Diphenylmethan-bismaleinimid als das mindestens eine 1,3-Dienophil enthält.

8. Verfahren nach einem der vorhergehenden Ansprüche, wobei die wärmeaushärtende Harzzusammensetzung aus Epoxidharz, Phenol-Formaldehydharz, Melamin-Formaldehydharz, Harnstoff-Formaldehydharz, Bismaleinimidharz, Polyimidharz, Cyanatesterharz, Benzoxazinharz, Vinylesterharz, Polyesterharz, Furanharz und Gemischen daraus ausgewählt wird, wobei die wärmeaushärtende Harzzusammensetzung vorzugsweise ein Epoxidharz ist.

9. Verfahren nach einem der vorhergehenden Ansprüche, wobei Schritt d) durch Aufsprühen, Tauchen, Aufbürsten und/oder Aufbringen des reversiblen Bindemittelsystems auf eine Walze und Übertragen des Systems auf die Verstärkungsfasern unter Verwendung der Walze durchgeführt wird.

10. Verfahren nach einem der vorhergehenden Ansprüche, wobei Schritt e) durch Infusion durchgeführt wird, wobei Schritt e) vorzugsweise durch Infusion unter erhöhter Temperatur durchgeführt wird.

11. Verfahren nach Anspruch 10, wobei Schritt e) unter 140 °C, vorzugsweise unter 130 °C und am meisten bevorzugt unter 125 °C durchgeführt wird.

12. Selbstheilender Verbundwerkstoff, herstellbar durch ein Verfahren nach einem der Ansprüche 1 bis 11.

13. Verwendung eines selbstheilenden Verbundwerkstoffs nach Anspruch 12 als Kabinen und/oder Konstruktionsbauteil in Transportfahrzeugen, beispielsweise in Flugzeugen oder Raumfahrzeugen.

14. Selbstheilungsverfahren, das die folgenden Schritte umfasst:
a) Bereitstellen des selbstheilenden Verbundwerkstoffs nach Anspruch 12 während einer und/oder nach einer Belastung des selbstheilenden Verbundwerkstoffs und
b) Erwärmen des selbstheilenden Verbundwerkstoffs aus Schritt a).

## Revendications

1. Procédé de fabrication de matériaux composites réparables, consistant à :
a) fournir des fibres de renforcement ;
b) fournir un système liant réversible comprenant au moins un 1,3-diène et au moins un diénophile qui est réactif avec ledit au moins un 1,3-diène ;
c) fournir une composition de résine thermodurcissable ;
d) mettre en contact les fibres de renforcement de l'étape a) avec le système liant réversible de l'étape b) pour obtenir une préforme du matériau composite réparable ; et
e) mettre en contact la préforme obtenue à l'étape d) avec la composition de résine thermodurcissable fournie à l'étape c) pour obtenir un matériau composite réparable.

2. Procédé selon la revendication 1, dans lequel les fibres de renforcement sont sélectionnées dans le groupe constitué de fibres de carbone, de fibres de verre, de fibres de céramique, de fibres métalliques, de fibres de carbure de silicium, de fibres aramides, de biofibres, de fibres de basalte et de mélanges de celles-ci, les fibres de renforcement étant préférablement des fibres de carbone.

3. Procédé selon l'une quelconque des revendications précédentes, dans lequel le système liant réversible comprend au moins une résine époxyde fonctionnalisée avec un 1,3-diène et/ou au moins une résine époxyde fonctionnalisée avec un diénophile, le système liant réversible comprenant préférablement au moins une résine époxyde fonctionnalisée avec un diénophile.

4. Procédé selon l'une quelconque des revendications précédentes, dans lequel le système liant réversible comprend au moins un 1,3-diène sélectionné dans le groupe constitué du furane, de la furfurylamine, de l'éther glycidylique de furfuryle, du 2-éthoxyméthylfurane, de l'acétate de furfuryle, du diacétate de furfuryle, de l'alcool furfurylique, du furfurylaldéhyde, du chlorure de furfuryle, du bromure de furfuryle, de l'iodure de furfuryle, de l'isocyanate de furfuryle, de l'isothiocyanate de furfuryle, de l'éther 2,2'-difurfurylique, du benzoate de furfuryle, du thiobutyrate de furfuryle, de l'acrylate de furfuryle, du furfurylpyrrole, du propionate de furfuryle, du butanoate de furfuryle, du pentanoate de furfuryle, de l'octanoate de furfuryle, du 2-furoate de furfuryle, du phénylacétate de furfuryle, de l'éther éthylfurfurylique, de l'éther isopropylfurfurylique, du disulfure de furfuryle et de propyle, et de mélanges de ceux-ci.

5. Procédé selon la revendication 4, dans lequel le système liant réversible comprend au moins un 1,3-diène sélectionné parmi la furfurylamine et/ou l'éther glycidylique de furfuryle.

6. Procédé selon l'une quelconque des revendications précédentes, dans lequel le système liant réversible comprend au moins un 1,3-diénophile sélectionné dans le groupe constitué du 4,4'-diphénylméthane bismaléimide, du bis-(3-éthyl-5-méthyl-4-maléimidephényl)méthane, du 2,2'-bis-[4-(4-maléimidephénoxy)phényl]propane, de l'arylamide bisnadimide, du N-phénylnadimide, du N-(10-carboxydécyl)nadimide, du N-(p-carboxyphényl)nadimide et de mélanges de ceux-ci.

7. Procédé selon la revendication 6, dans lequel le système liant réversible comprend du 4,4'-diphénylméthane bismaléimide comme ledit au moins un 1,3-diénophile.

8. Procédé selon l'une quelconque des revendications précédentes, dans lequel la composition de résine thermodurcissable est sélectionnée parmi une résine époxyde, une résine phénol-formaldéhyde, une résine mélamine-formaldéhyde, une résine urée-formaldéhyde, une résine bismaléimide, une résine polyimide, une résine cyanate ester, une résine benzoxazine, une résine ester vinylique, une résine polyester, des résines furaniques et des mélanges de celles-ci, la composition de résine thermodurcissable étant préférablement une résine époxyde.

9. Procédé selon l'une quelconque des revendications précédentes, dans lequel l'étape d) est exécutée par pulvérisation, immersion, application au pinceau et/ou application du système liant réversible sur un rouleau et transfert du système sur les fibres de renforcement en utilisant le rouleau.

10. Procédé selon l'une quelconque des revendications précédentes, dans lequel l'étape e) est exécutée par infusion, l'étape e) étant préférablement exécutée par infusion à une température élevée.

11. Procédé selon la revendication 10, dans lequel l'étape e) est exécutée à une température inférieure à 140°C, préférablement à une température inférieure à 130 °C, et idéalement à une température inférieure à 125 °C.

12. Matériau composite réparable pouvant être obtenu par le procédé selon l'une quelconque des revendications 1 à 11.

13. Utilisation d'un matériau composite réparable selon la revendication 12 comme élément de cabine et/ou élément structural dans des véhicules de transport, par exemple dans des avions ou des véhicules spatiaux.

14. Procédé de réparation, consistant à :
a) fournir le matériau composite réparable selon la revendication 12 pendant et/ou après un impact sur le matériau composite réparable ; et
b) chauffer le matériau composite réparable de l'étape a).
